# EUROPÄISCHE PATENTSCHRIFT

(11) **EP 1 048 858 B1**
(45) Veröffentlichungstag und Bekanntmachung des Hinweises auf die Patenterteilung: **12.01.2005**
(21) Anmeldenummer: 00108199.1
(22) Anmeldetag: 14.04.2000
(51) Int. Cl.: F16B 37/12

(54) **Gewindeeinsatzelement für Kunststoff und Verfahren zum Einsetzen desselben in Kunststoff**
Threaded insert for plastic material and process for inserting it in plastic material
Insert fileté pour matière plastique et méthode pour l'insérer dans la matière plastique

(30) Priorität: 26.04.1999 DE 19918683
(43) Veröffentlichungstag der Anmeldung: 02.11.2000
(73) Patentinhaber: WILO AG, 44263 Dortmund (DE)
(72) Erfinder: Zelder, Manfred, 53225 Bonn (DE)
(74) Vertreter: COHAUSZ DAWIDOWICZ HANNIG & PARTNER

(56) Entgegenhaltungen:
- DE-A- 4 227 273
- GB-A- 972 814
- US-A- 2 560 951
- US-A- 3 200 691
- US-A- 4 363 581

## Beschreibung

Die vorliegende Erfindung betrifft ein Gewindeeinsatzelement zum Einsatz in einen Kunststoffkörper, mit einem Außengewinde und mit einem Innengewinde, wobei das Außengewinde an seinen Flanken Einkerbungen und/oder Vorsprünge aufweist.

Die Erfindung betrifft ferner ein Verfahren zum Einsetzen eines derartigen Gewindeeinsatzelementes in einen Kunststoffkörper.

Solche Gewindeeinsatzelement und Verfahren sind aus dem US-A 2,560,951 bekannt.

Derartige Gewindeeinsätze sind beispielsweise aus den deutschen Gebrauchsmustern DE-GM 18 73 835 oder DE-GM 66 02 649 bekannt. Sie werden in Kunststoffkörper eingeschraubt, um Befestigungselemente, zum Beispiel Schrauben, fest oder insbesondere lösbar einschrauben zu können. Dabei ist es besonders wichtig, daß das Gewindeeinsatzelement sowohl bei hohen Zug- oder Druckkräften als auch bei hohen Drehmomentbeanspruchungen dauerhaft sicher im Kunststoffkörper verbleibt und sich nicht lockert oder sogar aus dem Kunststoffkörper ausreißt. Für die Bemessung der Festigkeit eines Gewindeeinsatzelementes in einem Kunststoffkörper können daher die Ausreißkraft und das Ausdrehmoment herangezogen werden.

Es ist aus den genannten Druckschriften bekannt, ein Gewindeeinsatzelement der eingangs genannten Art mit einem selbstschneidenden Außengewinde in eine Bohrung in einem Kunststoffkörper einzuschrauben. Dabei werden jedoch die Kunststoffasern am Rand der Bohrung durch die Flanken des Außengewindes beschädigt. Die Festigkeit eines derartigen Gewindeeinsatzelementes gegen Auszugskräfte ist daher begrenzt. Dabei ist auch zu berücksichtigen, daß beim Aufbringen einer Zugkraft auf das Gewindeeinsatzelement die in Auszugsrichtung an den Gewindeflanken anliegenden Kunststoffbereiche zusätzlich auch durch Scherkräfte beansprucht werden. Außerdem hat ein auf diese Weise eingebrachtes Gewindeeinsatzelement nur eine sehr geringe Festigkeit gegenüber Ausdrehmomenten.

Auch sind Gewindeeinsatzelemente einer vollständig verschiedenen Bauart ohne Außengewinde bekannt, die bei der Fertigung des Kunststoffkörpers in die Spritzgußform eingesetzt und anschließend mit Kunststoff umspritzt werden. Diese Gewindeeinsatzelemente weisen Hinterschnitte, beispielsweise an ihren beiden Stirnseiten jeweils einen nach außen überstehenden Flansch auf. Zwischen diesen beiden Flanschen liegt der Kunststoff an dem mittleren glatten Bereich des Gewindeeinsatzelementes an und bildet somit an der dem ersten, an der Oberfläche des Kunststoffkörpers anliegenden Flansch zugewandten Seite des zweiten Flansches eine Fläche zum Abstützen gegen Zugbeanspruchungen. Die gesamte Ausreißkraft wird daher nur im Bereich des unteren Bundes bzw. Flansches auf den Kunststoff übertragen, was zu sehr hohen Druckbeanspruchungen des Kunststoffs in diesem Bereich führt. Dabei kann auch die Fließgrenze des Kunststoffs überschritten werden. Aus diesem Grunde ist die Festigkeit gegen Ausreißkräfte auch bei diesem Gewindeeinsatzelement relativ gering.

Die beiden Flansche sind eckig, insbesondere sechskantförmig ausgestaltet, um auf diese Weise eine höhere Festigkeit gegen Ausdrehmomente zu erreichen. Hierbei kommt es jedoch an den Enden der seitlichen Kanten zu hohen Druckbeanspruchungen der angrenzenden Kunststoffbereiche, was auf Dauer zur Lockerung und zum Ausfall des Gewindeeinsatzelementes führen kann.

Ein weiterer Nachteil liegt hierbei darin, daß ein derartiges Gewindeeinsatzelement an der der Außenseite des Kunststoffkörpers gegenüberliegenden Seite geschlossen sein muß, damit bei dem Gießvorgang das Innengewinde des Gewindeeinsatzelementes frei bleibt. Unter zusätzlicher Berücksichtigung der über die nutzbare Gewindelänge hinausgehenden Bereiche für den Auslauf des Innengewindes sowie für die Bohrerspitze beim Vorbohren des Kernsacklochs ergibt sich somit ein erheblicher Anteil der Gesamtlänge, der zur eigentlichen Funktion des Gewindeeinsatzelementes nicht erforderlich ist und daher zusätzlichen Platz- und Materialbedarf sowie höhere Kosten verursacht.

Aufgabe der Erfindung ist es daher, ein konstruktiv einfaches und leicht handhabbares Gewindeeinsatzelement der eingangs genannten Art zu schaffen, das bei geringen Außenabmessungen preiswert herzustellen ist und bei großer Festigkeit gegen Ausreißkräfte und Ausdrehmomente auch bei schwellender oder wechselnder Beanspruchung einen dauerhaft sicheren Halt gewährleistet. Aufgabe der Erfindung ist es ferner, ein Verfahren zum Einsetzen eines derartigen Gewindeeinsatzelementes bereitzustellen, das einfach und schnell und somit kostengünstig durchzuführen ist und die Fasern der angrenzenden Kunststoffbereiche nicht beschädigt.

Diese Aufgabe wird erfindungsgemäß durch ein Gewindeeinsatzelement nach Anspruch 1 bzw. durch ein Verfahren nach Anspruch 9 gelöst. Wesentlich ist dabei, daß da Gewindeeinsatzelement an einer Stirnseite durch lösbar befestigtes ein Verschlußteil abgeschlossen ist, damit es für das erfindungsgemäße Verfahren einsetzbar ist.

Der wesentliche Vorteil besteht darin, daß auf diese Weise gegenüber den aus dem Stand der Technik bekannten Gewindeeinsatzelementen eine bis zu dreifach höhere Festigkeit gegen Ausreißkräfte sowie eine wesentlich höhere Festigkeit gegen Ausdrehmomente erreicht werden kann. Diese Festigkeitswerte bleiben auch bei schwellenden oder bei Wechselbeanspruchungen dauerhaft erhalten.

Das erfindungsgemäße Gewindeeinsatzelement zeichnet sich bei einer kompakten Bauweise durch geringen Material- und Platzbedarf aus. Es ist bei einfacher Konstruktion und leichter Handhabbarkeit besonders schnell und kostengünstig herzustellen. Auch kann es ohne weitere Vorbereitungsschritte unmittelbar gemäß dem erfindungsgemäßen Verfahren in einen Kunststoffkörper eingebracht werden, ohne dessen an dem Außengewinde anliegenden Fasern zu beschädigen.

Um eine möglichst platzsparende Bauweise zu ermöglichen, kann das Verschlußteil vorteilhafterweise in Form einer dünnen Platte ausgeführt sein. Vorzugsweise wird vorgeschlagen, einen Aufkleber aus Papier oder aus Folie zu verwenden. Hierbei ist nahezu die gesamte axiale Länge für das Innengewinde nutzbar. Demgegenüber steht bei den zuvor erwähnten Gewindeeinsatzelementen mit glatter Außenfläche und zwei stirnseitigen Flanschen, die aus einem massiven Stück gearbeitet sind und in die die Innenbohrung mit dem Innengewinde nachträglich eingebracht wird, aufgrund der über die nutzbare Gewindelänge hinausgehenden Bereiche für den Auslauf des Innengewindes sowie für die Bohrerspitze beim Vorbohren des Kernsacklochs nur ein erheblich reduzierter Anteil der Gesamtlänge des Gewindeeinsatzelementes für die eigentliche Funktion zur Verfügung.

Besonders hohe Festigkeitswerte gegen Ausreißkräfte und Ausdrehmomente können dadurch erreicht werden, daß die Einkerbungen und/oder Vorsprünge in bzw. an den radial außen liegenden Spitzen der Gewindeflanken angeordnet sind.

Die Einkerbungen und/oder Vorsprünge können dabei in axialer Richtung regelmäßig über das Gewindeprofil verteilt sein. Vorzugsweise sind sie an jeder Gewindeflanke angeordnet. Auch können die Einkerbungen und/oder Vorsprünge regelmäßig über den Umfang der Gewindeflanken verteilt sein. Besonders vorteilhaft ist es dabei, wenn die Einkerbungen und/oder Vorsprünge in axialer Richtung in achsparallelen Reihen hintereinander fluchtend angeordnet sind.

In bevorzugten Ausführungsformen sind dabei zwischen vier und zwanzig, vorzugsweise zwölf Reihen von Einkerbungen und/oder Vorsprüngen über den Umfang verteilt. Ein besonders ausgewogenes Verhältnis der Festigkeitssteigerung gegenüber Ausreißkräften zu der Festigkeitssteigerung gegenüber Ausdrehmomenten kann dadurch erreicht werden, daß die Einkerbungen und/oder Vorsprünge eine radiale Erstreckung von 20% bis 80% der Flankenhöhe aufweisen. In einer bevorzugten Ausführungsform haben die Einkerbungen eine Tiefe von 50% bzw. die Vorsprünge eine Höhe von 50% der Flankenhöhe des Außengewindes.

Auf besonders einfache und kostengünstige Weise können die Einkerbungen in das Außengewinde des Gewindeeinsatzelementes durch Druckumformen, insbesondere durch Walzen eingebracht werden. So können die Einkerbungen vorzugsweise auch mit einem Rändelwerkzeug eingedrückt werden.

Das Gewindeeinsatzelement kann besonders kostengünstig als Abschnitt einer Gewindestange ausgeführt sein, die mit einem Innengewinde sowie mit einem Außengewinde versehen als Standardbauteil erhältlich ist. Die Einkerbungen und/oder Vorsprünge können dabei vor oder nach dem Abtrennen der einzelnen Abschnitte in bzw. auf das Außengewinde aufgebracht werden.

Besonders vorteilhaft ist es ferner, wenn das Gewindeeinsatzelement auch an der zweiten Stirnseite durch ein lösbar befestigtes zweites Verschlußteil abgeschlossen ist. Dieses zweite Verschlußteil kann vorzugsweise ebenfalls als Papieraufkleber ausgeführt sein, der nach dem Einbringen in den Kunststoffkörper auf einfache Weise schnell entfernt werden kann.

Das voranstehend beschriebene Gewindeeinsatzelement kann auf besonders einfache Weise nach dem nachfolgend beschriebenen erfindungsgemäßen Verfahren in einen Kunststoffkörper eingebracht werden.

Bei dem erfindungsgemäßen Verfahren zum Einsetzen eines derartigen Gewindeeinsatzelementes in einen Kunststoffkörper ist es wesentlich, daß das Gewindeeinsatzelement an der in das Innere des Kunststoffkörpers hineinragende Stirnseite durch ein lösbar befestigtes Verschlußteil verschlossen ist, daß es über die nach außen offene Stirnseite, insbesondere über einen in das Innengewinde einschraubbaren Kern in dem Spritzgußwerkzeug für den Kunststoffkörper positioniert wird, und daß es anschließend mit Kunststoff umspritzt wird.

Der Kunststoff härtet dabei um das Gewindeeinsatzelement herum aus, wobei er sich mit den Gewindeflanken des Außengewindes verzahnt, ohne daß die Kunststoffasern in diesem Bereich beschädigt werden. Auf diese Weise ist eine besonders hohe Sicherheit gegen Ausreißkräfte erreichbar. In gleicher Weise verzahnt sich der Kunststoff in Umfangsrichtung mit den Einkerbungen bzw. mit den Vorsprüngen an den Gewindeflanken, wodurch sich eine besonders hohe Sicherheit gegen Ausdrehmomente ergibt.

Wesentlich bei dem erfindungsgemäßen Verfahren ist, daß das Gewindeeinsatzelement zwar ein Außengewinde aufweist, aber daß es nicht als selbstschneidendes Element in den Kunststoffkörper hineingedreht wird, so daß die Kunststoffasern in diesem Bereich nicht beschädigt werden. Bei den bekannten Verfahren zum Einbringen von Gewindeeinsatzelementen wurden entweder die Fasern durch das zumindest zu einem Teil selbstschneidende Außengewinde beim Eindrehen beschädigt oder die Gewindeeinsatzelemente wurden eingegossen bzw. mit Kunststoff umspritzt, ohne ein Außengewinde aufzuweisen, wodurch die zuvor genannten Nachteile insbesondere des erhöhten axialen Platzbedarfs und der verminderten Festigkeit gegen Ausreißkräfte sowie der Gefahr der Lockerung bei wechselnden Drehmomentbelastungen hervorgerufen werden.

Weitere Vorteile und Merkmale der Erfindung ergeben sich aus den Unteransprüchen sowie aus der nachfolgenden Beschreibung und den in den Zeichnungen dargestellten Ausführungsbeispielen.

Es zeigen:
- **Figur 1:**: Teilquerschnitt durch ein in Kunststoff eingesetztes erfindungsgemäßes Gewindeeinsatzelement.
- **Figur 2:**: Teilschnittansicht entlang eines halben Gewindegangs entlang der Schnittlinie A-A aus Figur 1.
- **Figur 3:**: Aus dem Stand der Technik bekanntes Gewindeeinsatzelement.
- **Figur 4:**: Alternative Ausführungsform eines herkömmlichen Gewindeeinsatzelementes und
- **Figur 5:**: Ansicht des Gewindeeinsatzelementes aus Richtung B in Figur 4.

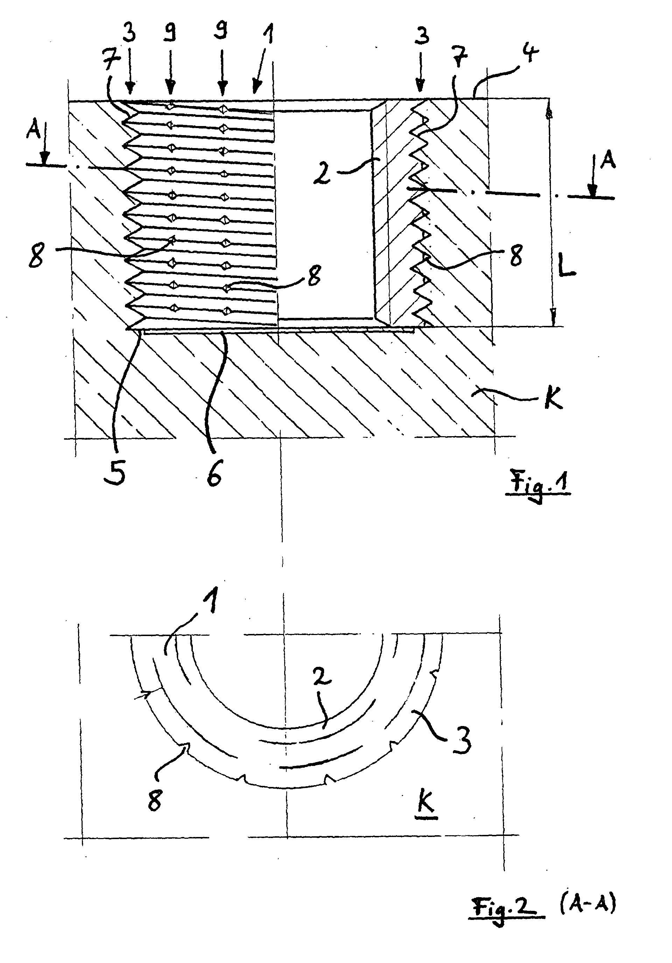

Das in Figur 1 dargestellte Gewindeeinsatzelement 1 ist ein Abschnitt einer Gewindestange mit einem Innengewinde 2 und einem Außengewinde 3. Beide Gewinde 2, 3 erstrecken sich über die gesamte Länge L des Gewindeeinsatzelementes 1. Die der Außenseite 4 des Kunststoffkörpers K abgewandte Stirnseite 5 ist durch einen Papieraufkleber 6 als erfindungsgemäß lösbar befestigtes Verschlußteil abgeschlossen.

In die außen liegenden Spitzen der Gewindeflanken 7 des Außengewindes 3 ist eine Vielzahl von Einkerbungen 8 eingebracht. Auf besonders einfache Weise sind diese Einkerbungen 8 durch eine Rändelrolle in die Gewindeflanken 7 eingedrückt worden, indem mit der Rändelrolle in mehreren achsparallelen Bahnen 9 über das Außengewinde 3 gefahren wurde. Auf diese Weise sind die Einkerbungen 8 hintereinander fluchtend in insgesamt zwölf Reihen 9 zumindest annähernd gleichmäßig über den Umfang des Außengewindes 3 verteilt. Die Tiefe einer Einkerbung 8 beträgt in etwa die Hälfte der Höhe einer Gewindeflanke 7.

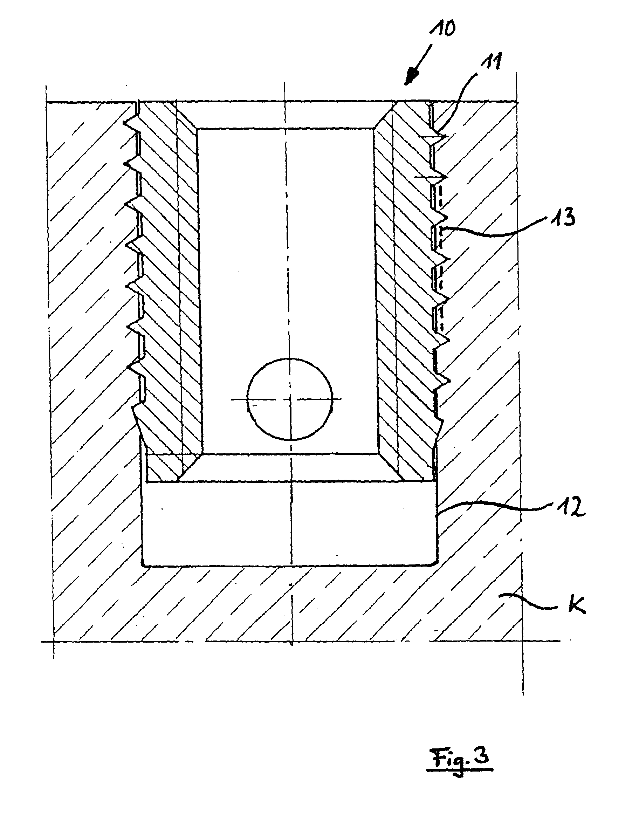

Das in Figur 3 dargestellte, aus dem Stand der Technik bekannte, Gewindeeinsatzelement 10 ist nicht mit Kunststoffmasse umspritzt bzw. umgossen worden, sondern es wurde nachträglich mit einem selbstschneidenden Außengewinde 11 in eine im Kunststoffkörper K befindliche Bohrung 12 eingeschraubt. Dabei werden die am Rand der Bohrung 12 befindlichen Kunststoffasern 13 durch Zerschneiden zerstört.

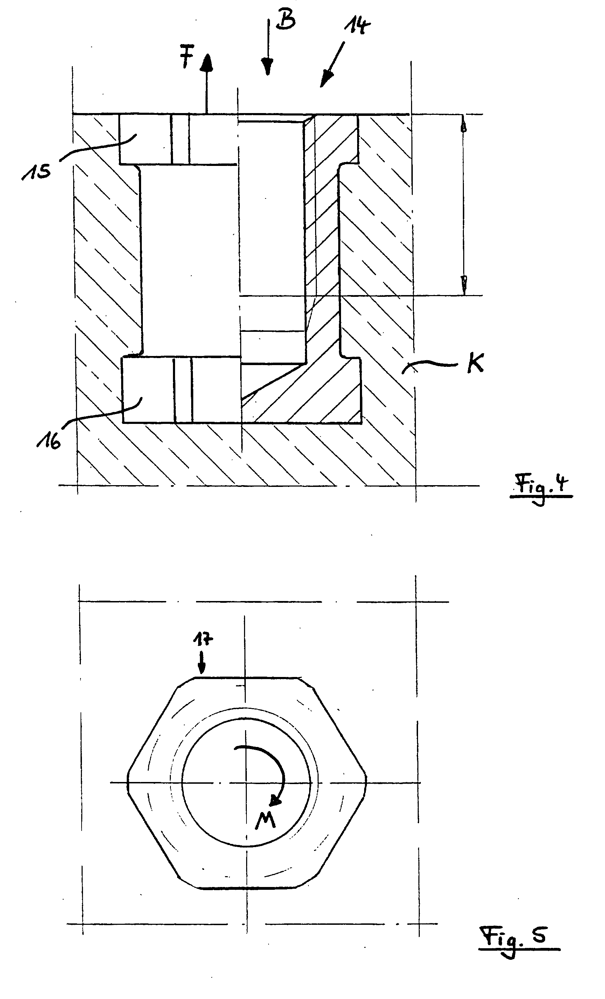

Eine derartige Faserzerstörung tritt bei dem in Figur 4 gezeigten, ebenfalls aus dem Stand der Technik bekannten Gewindeeinsatzelement 14 nicht auf, das wie das erfindungsgemäße Gewindeeinsatzelement 1 mit Kunststoffmasse K umspritzt wird. Es hat einen oberen Flansch 15 und einen unteren Flansch 16, die beide einen sechskantförmigen Querschnitt aufweisen. An den Enden 17 der Kanten der beiden Flansche kommt es bei Einwirkung eines Verdrehmomentes 11 zu relativ hohen Druckspannungen, die dazu führen können, daß der Kunststoff die Fließgrenze überschreitet, wodurch sich das Gewindeeinsatzelement 14 im Kunststoff K lockert.

Ebenso kommt es bei auf das Gewindeeinsatzelement 14 einwirkenden Zugkräften F in den dem unteren Flansch 16 benachbarten Bereichen zu sehr hohen Druckspannungen, die ebenfalls dazu führen können, daß der Kunststoff in diesem Bereich die Fließgrenze überschreitet. Da die gesamte Ausreißkraft F von dem überstehenden Bund des unteren Flansches 16 auf den Kunststoffkörper K übertragen werden muß, kann es hierdurch ebenfalls zu einer Lockerung oder sogar zum vollständigen Herausziehen und somit zum Ausfall des Gewindeeinsatzelementes 14 kommen.

Bei dem erfindungsgemäßen Gewindeeinsatzelement 1 kommt es auch bei relativ hohen Zugkräften oder Drehmomenten nicht zu derart hohen Beanspruchungen im Kunststoffkörper K. In Laboruntersuchungen wurde festgestellt, daß bei einem Außengewinde 3 der Größe M16 Zugkräfte bis zu 32.000 Newton bzw. Drehmomentbelastungen bis zu 120 Newtonmeter vom Gewindeeinsatzelement 1 ohne Beschädigung auf den Kunststoffkörper K übertragen werden können. Dies bedeutet gegenüber den beiden bekannten Ausführungsformen gemäß den Figuren 3 bis 5 eine Steigerung um den Faktor 3. Bei diesen bekannten Ausführungsformen reichten bei gleichen Abmessungen Zugkräfte von ca. 11.000 Newton aus, um die Gewindeeinsatzelemente aus dem Kunststoff auszureißen.

Hinsichtlich der erforderlichen Ausdrehmomente sind bei der bekannten Ausführungsform gemäß Figur 4 und 5 mit bis zu ca. 60 bis 70 Newtonmetern die gefahrlos übertragbaren Belastungen nur ca. halb so groß. Bei der Ausführungsform gemäß Figur 3 ist der Unterschied noch größer. Hier genügt bereits ein Ausdrehmoment von ca. 8 Newtonmetern, um zum Versagen des Gewindeeinsatzelementes 10 zu führen. Die Sicherheit gegen ein Aufdrehen kann somit mit einem erfindungsgemäßen Gewindeeinsatzelement 1 um den Faktor 15 gesteigert werden.

## Patentansprüche

1. Gewindeeinsatzelement (1) zum Einsatz in einen Kunststoffkörper (K), mit einem Außengewinde (3) und mit einem Innengewinde (2), wobei das Außengewinde an seinen Flanken (7) Einkerbungen (8) und/oder Vorsprünge (9) aufweist, und das Gewindeeinsatzelement (1) an einer Stirnseite (5) durch ein Verschlussteil (6) abgeschlossen ist
**dadurch gekennzeichnet,**
**dass** das Verschlussteil (6) ein an der Stirnseite (5) lösbar befestigtes Verschlussteil (6) ist.

2. Gewindeeinsatzelement nach Anspruch 1, **dadurch gekennzeichnet, dass** das Verschlussteil ein vorzugsweise aus Papier oder Folie bestehender Aufkleber (6) ist, der auf die Stirnseite (5) des Gewindeeinsatzelementes (1) aufgeklebt ist.

3. Gewindeeinsatzelement nach Anspruch 1 oder 2,
**dadurch gekennzeichnet, dass** die Einkerbungen (8) und/oder Vorsprünge in bzw. an den radial außenliegenden Spitzen der Gewindeflanken (7) angeordnet sind.

4. Gewindeeinsatzelement nach einem der vorherigen Ansprüche, **dadurch gekennzeichnet, dass** die Einkerbungen (8) und/oder Vorsprünge in axialer Richtung fluchtend, in achsparallelen Reihen (9) hintereinanderliegend angeordnet sind.

5. Gewindeeinsatzelement nach Anspruch 4, **dadurch gekennzeichnet, dass** zwischen 4 und 20, vorzugsweise 12 Reihen (9) von Einkerbungen (8) und/oder Vorsprüngen über den Umfang verteilt sind.

6. Gewindeeinsatzelement nach einem der vorherigen Ansprüche, **dadurch gekennzeichnet, dass** die Einkerbungen (8) und/oder Vorsprünge eine radiale Erstreckung von zwischen 20% und 80%, vorzugsweise von 50% der Flankenhöhe aufweisen.

7. Gewindeeinsatzelement nach einem der vorherigen Ansprüche, **dadurch gekennzeichnet, dass** die Einkerbungen (8) durch Druckumformen, insbesondere durch Walzen eingebracht sind.

8. Gewindeeinsatzelement nach einem der vorherigen Ansprüche, **dadurch gekennzeichnet, dass** es an der zweiten Stirnseite durch ein lösbar befestigtes zweites Verschlussteil abgeschlossen ist.

9. Verfahren zum Einsetzen eines Gewindeeinsatzelementes (1) nach einem der vorherigen Ansprüche in einen Kunststoffkörper (K),
wobei das Gewindeeinsatzelement (1) an einer Stirnseite (5) durch ein lösbar befestigtes Verschlussteil (6) abgeschlossen und über die nach außen offene Stirnseite, insbesondere über einen in das Innengewinde (2) einschraubbaren Kern, in dem Spritzgußwerkzeug für den Kunststoffkörper (K) positioniert wird und dass es anschließend mit Kunststoff umspritzt wird.

## Claims

1. Threaded insert (1) for insertion in a plastics body (K), having an external thread (3) and an internal thread (2), the external thread having on its flanks (7) notches (8) and/or projections (9) and the threaded insert (1) being terminated at its end face (5) by an anchoring part (6), **characterised in that** the anchoring part (6) is fixed detachably to the end face (5).

2. Threaded insert according to claim 1, **characterised in that** the anchoring part is an adhesive seal (6) preferably made of paper or film which is bonded to the end face (5) of the threaded insert (1).

3. Threaded insert according to claim 1 or 2, **characterised in that** the notches (8) and/or projections are arranged in or on the radially outer points of the flanks (7) of the thread.

4. Threaded insert according to any one of the preceding claims, **characterised in that** the notches (8) and/or projections are aligned in the axial direction one behind the other in rows (9) parallel to the axis.

5. Threaded insert according to claim 4, **characterised in that** between 4 and 20, preferably 12 rows (9) of notches (8) and/or projections are distributed over the circumference.

6. Threaded insert according to any one of the preceding claims, **characterised in that** the notches (8) and/or projections have a radial extension of between 20% and 80%, preferably of 50%, of the height of the flank.

7. Threaded insert according to any one of the preceding claims, **characterised in that** the notches (8) are formed under compressive conditions, in particular by rolling.

8. Threaded insert according to any one of the preceding claims, **characterised in that** it is terminated at its second end face by a detachably fixed second anchoring part.

9. Method for inserting a threaded insert (1) according to any one of the preceding claims in a plastics body (K), the threaded insert (1) being terminated at one end face (5) by a detachably fixed anchoring part (6) and being positioned in the injection moulding tool for the plastics body (K) via the outwardly open end face, in particular via a core which can be screwed into the internal thread (2), and in that plastics material is then injected around it.

## Revendications

1. Insert fileté (1) pour insérer dans un corps (K) en matière synthétique, avec un filetage (3) et avec un taraudage (2), le filetage présentant sur ses flancs (7) des entailles (8) et/ou des saillies (9) et l'insert fileté (1) est fermé sur une face frontale (5) par une pièce de fermeture (6),
**caractérisé par le fait que** la pièce de fermeture (6) est une pièce de fermeture (6) fixée de manière démontable à la face frontale (5).

2. Insert fileté selon la revendication 1,
**caractérisé par le fait que** la pièce de fermeture est une étiquette adhésive (6) constitué de préférence en papier ou feuille qui est collée sur la face frontale (5) de l'insert fileté (1).

3. Insert fileté selon la revendication 1 ou 2,
**caractérisé par le fait que** les entailles (8) et/ou saillies sont disposées dans ou respectivement sur les pointes se trouvant à l'extérieur radialement des flancs (7) de filetage.

4. Insert fileté selon l'une des revendications précédentes,
**caractérisé par le fait que** les entailles (8) et/ou saillies sont disposées en rangées (9) parallèles à l'axe se trouvant les unes derrière les autres et alignées en direction axiale.

5. Insert fileté selon la revendication 4,
**caractérisé par le fait qu'**entre 4 et 20, de préférence 12 rangées (9) d'entailles (8) et/ou saillies sont réparties sur la périphérie.

6. Insert fileté selon l'une des revendications précédentes,
**caractérisé par le fait que** les entailles (8) et/ou saillies présentent une étendue radiale d'entre 20 % et 80 %, de préférence de 50 % de la hauteur des flancs.

7. Insert fileté selon l'une des revendications précédentes,
**caractérisé par le fait que** les entailles (8) sont introduites par déformation sous pression, en particulier par laminage.

8. Insert fileté selon l'une des revendications précédentes,
**caractérisé par le fait qu'**il est fermé à la seconde face frontale par une seconde pièce de fermeture fixée de manière démontable.

9. Procédé d'insertion d'un élément d'insert fileté (1) selon l'une des revendications précédentes dans un corps (K) en matière synthétique, l'insert fileté (1) étant fermé à une face frontale (5) par une pièce de fermeture (6) fixée de manière démontable et positionné par l'intermédiaire de la face frontale ouverte vers l'extérieur, en particulier par l'intermédiaire d'un noyau pouvant être vissé dans le taraudage (2), dans l'outil de moulage par injection pour le corps (K) en matière synthétique et qu'il est ensuite couvert par injection par de la matière synthétique.
